# EUROPEAN PATENT SPECIFICATION

(11) **EP 1 639 345 B1**
(45) Date of publication and mention of the grant of the patent: **05.11.2008**
(21) Application number: 04777206.6
(22) Date of filing: 28.06.2004
(51) Int. Cl.: G01N 21/27

(54) **STANDARD INSULATING GLASS UNITS HAVING KNOWN CONCENTRATIONS OF A GAS**
STANDARDISOLIERGLASEINHEITEN MIT BEKANNTEN KONZENTRATIONEN EINES GASES
VITRAGES D'ISOLATION STANDARD POSSEDANT DES CONCENTRATIONS CONNUES D'UN GAZ

(30) Priority: 30.06.2003 US 610160
(43) Date of publication of application: 29.03.2006
(73) Proprietor: CARDINAL IG COMPANY, Eden Prairie, MN 55344 (US)
(72) Inventor: ERICKSON, Gene, P., Prior Lake, MN 55372 (US); LOCKMAN, Eric, J., Arena, WI 53503 (US); SPINDLER, Robert, G., Eden Prairie, MN 55347 (US)
(74) Representative: Howe, Steven
(86) International application number: PCT/US2004/020746
(87) International publication number: WO 2005/005968

(56) References cited:
- EP-A- 0 916 801
- WO-A-99/51968
- US-A- 4 939 926
- US-B1- 6 397 662
- USGLASS, [Online] vol. 36, no. 9, September 2001 (2001-09), XP008038193 Retrieved from the Internet: URL:http://www.usglassmag.com/backissues/0 109/showcase.html> [retrieved on 2004-11-04]
- GLORA M ET AL: "NON-DESTRUCTIVE DETERMINATION OF THE RARE-GAS CONTENT OF HIGHLY INSULATING WINDOW SYSTEMS" MEASUREMENT SCIENCE AND TECHNOLOGY, IOP PUBLISHING, BRISTOL, GB, vol. 10, no. 7, July 1999 (1999-07), pages 592-597, XP000931084 ISSN: 0957-0233

## Description

### FIELD OF THE INVENTION

This invention relates to standard insulating glass units having known concentrations of a gas for use in calibration.

### BACKGROUND OF THE INVENTION

Insulating glass units (IGUs) are typically composed of two parallel glass panes spaced apart by a peripheral spacer. Spacers are typically made of metal, butyt materials, silicone foam or plastic materials. They are usually of tubular configuration, and are formed so as to have two flat sides that face the confronting surfaces of the glass panes. The metal spacers are bent so as to conform to the periphery of the glass panes. Typically, the spacers are adhered to the glass panes with a sealant that is gas-impermeable, such as polyisobuytlene. An additional sealant, with strong adhesion force, such as silicone, is commonly applied around the outside edges of the IGU. EPO916801 discloses on insulating glass unit in which the spacer is obtained by depositing an endless tape of thermoplastic material around the periphery of two glass panes. To improve thermal resistance across the glass assemblies, the space between the panes of glass, or interpane space, may be filled with a proper amount of a gas such as argon. To perform adequately, the IGU must be filled with the proper amount of gas. Typically the amount of gas flowed into the interpane space is gauged by flowing gas at a known rate for a specified period of time.

Often, at least one pane surface of an insulating glass unit is coated with a low emissivity coating to prevent conduction of heat through the glass. These coatings are known in the industry to be called low emissivity coatings. These coatings reflect long wave (room side) energy which assists in reducing winter U values. These coatings can result in the reflectance of color from the glass surface. Typically, color reflectance is undesirable. Therefore, for aesthetic purposes, it is desirable to manufacture glass and IGUs that reflect at wavelengths in the blue or blue/green range.

In the manufacture of IGUs, uniform production lines are often used to produce large quantities of glass assemblies. In a typical production line, glass panes are transported to a conveyor with rollers on a vertical platen that transports the panes to a number of stations where various steps of the assembly process are performed.

In modern IGUs, with low emissivity coated glass, the interpane space is filled with an inert gas, i.e., argon. The percentage of argon usually ranges from about 40% to about 100%. It is important to know the inert gas content contained in an IGU and there have been various methods of making such a determination.

One nondestructive method uses a laser and Raman spectroscopy to determine certain gas content. In particular, the system does not directly measure argon as it can only measure diatomic gases, i.e. O₂ and N₂. Argon percentage is then determined by subtracting the O₂ content and N₂ content from one hundred percent.

A disadvantage with this method is that it requires long exposure time, usually upwards of 20 minutes. In addition, the conditions in which the system must operate to obtain accurate results is not amenable to implementing the system in a production line environment. Also, the components of the system can be prohibitively expensive.

Another nondestructive method of measuring the amount of gas, in particular argon, in an assembled IGU has been introduced by Sparklike, Ltd, of Finland. Sparklike introduced the GasGlass device which includes a measuring device called the sparkunit; a processor which receives optical signals from the measuring device and processes those signals to determine argon concentration and a display for displaying the concentration of argon preferably as a percentage. The measuring device measures the concentration of argon in the interpane space by producing a high voltage spark in the interpane space. The color of the spark is detected by an optical sensor on the measuring device and is correlated to a concentration of argon. Presently the GasGlass device is solely used to detect argon concentrations.

In using the GasGlass device, the user has no way of knowing if the unit is properly calibrated, or, if after usage, the unit needs to be recalibrated. One known method of testing the calibration of the unit is commonly referred to as the purge and fill method. In this method, a sample IGU is used. A small hole covered by a plug has been made in the spacer in which a lance can be inserted. The interpane space is filled with argon gas the quantity of which is to be determined. A reading is taken with the GasGlass device and a percentage value is displayed. With the lance inserted in the small hole so that it extends into the interpane space, a gas such as Oxygen is emitted from a central portion of the lance into the interpane space. The lance has an aperture at its end that allows the gas that was in the interpane space to be purged out of that space. A sensor measures the gas flowing out of the interpane space The reading taken by the GasGlass device is compared with the measurement taken by the lance method and, if there is a discrepancy, it is known that the unit needs to be recalibrated. The owner of the unit then needs to send the unit back to its distributor if the distributor offers such calibration service or back to the manufacturer.

A disadvantage with this method is that the same sample unit is used for all testing to create a calibration curve for various percentages of gas, thus the sample unit has to be purged and refilled for each reading. This slows down the time it takes to test a unit as well as makes it a labor intensive process. In addition, because one sample unit is used, it becomes damaged over time from repeated testing with the GasGlass device. In addition, if the unit was not properly calibrated or needed to be recalibrated, the owner had to send the unit back to its distributor or the manufacturer which added additional delay.

It would therefore be desirable to provide a method of quickly and easily testing the measuring device to see if it is correctly calibrated and, if needed, recalibrate the device on the spot, even in a production line environment.

### SUMMARY OF THE INVENTION

According to the present invention, there is provided a calibration standard unit of an insulating glass as defined by claim 1.

Advantageously, a plurality of such calibration standard units are provided, wherein each calibration standard unit has a known amount of a gas.

### BRIEF DESCRIPTION OF THE DRAWINGS

Figure 1 illustrates one example of a portion of an insulated glass article.
Figure 2 is a cross-sectional view of a portion of an insulated glass unit.
Figure 3 illustrates generally a portion of a production line for manufacturing insulated glass units.
Figure 4 is a perspective view of a measuring device.
Figure 5 is an elevational view of the measuring end of the measuring device shown in Figure 4.
Figure 6 is a perspective schematic of an argon measuring station provided on an insulated glass unit production line;
Figure 7 is a perspective view of a sample unit created according to a preferred embodiment of the present invention.
Figure 8 is a perspective view of a sample unit created according to another preferred embodiment of the present invention.
Figure 9 is a perspective view of a spacer according to a preferred embodiment of the present invention.
Figure 10 is a perspective view of a device used to determine if the power of the measurement unit is sufficient to perform a spark test.

### DETAILED DESCRIPTION OF THE PREFERRED EMBODIMENTS OF THE PRESENT INVENTION

The following detailed description should be read with reference to the drawings, in which like elements in different drawings are numbered identically. The drawings depict selected embodiments and are not intended to limit the scope of the invention. It will be understood that embodiments shown in the drawings and described above are merely for illustrative purposes, and are not intended to limit the scope of the invention as defined in the claims that follow.

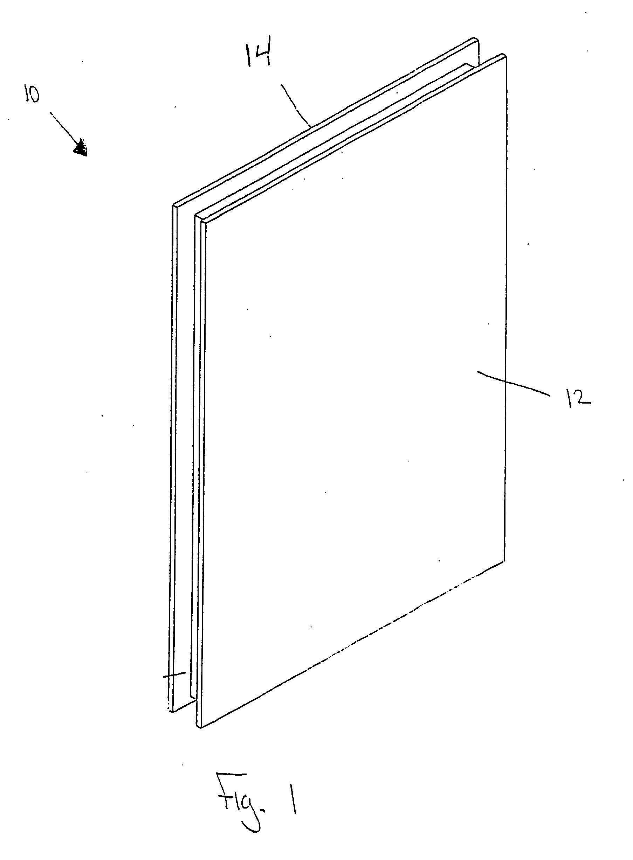

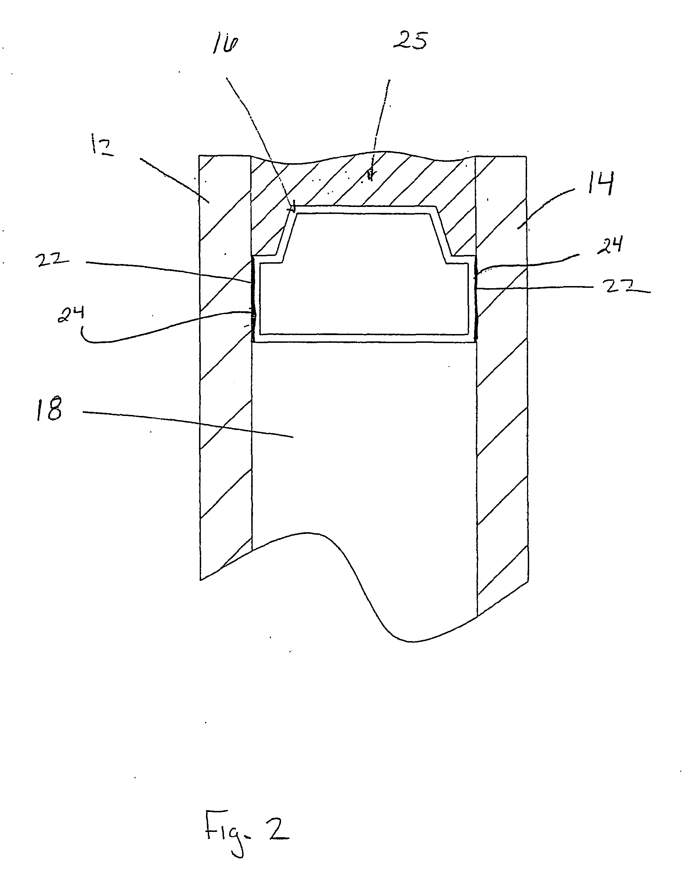

FIG. 1 illustrates one example of a portion of an insulating glass article, an insulating glass unit (IGU) 10. It is to be understood that the invention is not intended to be limited to a particular type of IGU. FIG. 2 is a cross-sectional view of a portion of an insulated glass unit. With reference to FIGs. 1 and 2, the IGU 10 includes a first pane of glass 12 and a second pane of glass 14. As shown in FIG. 2, the panes are spaced apart in a substantially parallel relationship by a spacer 16. Between the panes 12, 14 and spacer 16 is an interpane space 18.

Typically the spacer 16 is formed of a metal such as aluminum or metal alloy tubing. The tubing can be provided in a variety of cross sectional configurations. It is noted that a variety of conventional spacer designs are commercially available from spacer manufacturers such as Allmetal and Homeshield.

Regardless of the particular spacer configuration, the spacer characteristically includes two generally opposed lateral surfaces 22 that are adapted to be bonded respectively to peripheral inner surfaces of the panes 12, 14. Bonding the spacer 16 to both panes desirably forms a gas-tight seal that prevents air and other gases from entering and exiting the interpane space 18.

The sealing system of an IGU 10 desirably minimizes gas flow between the interpane space 18 and the ambient environment outside the IGU. While some IGUs have only a single seal, high performance units preferably have two seals, a primary or first seal 24 that is between the lateral surfaces 22 of the spacer 16 and the inner peripheral surfaces of the panes 12, 14 as represented by the dark line and a secondary or second seal 25. The first seal 24 is preferably formed of a material that is resistant to permeation of air, moisture and any insulative gas fill. For example, this seal can be advantageously formed of a butyl sealant (e.g., polyisobutylene). The second seal 25 is preferably formed of a material that has good adhesive properties. For example, this seal can be formed of silicone, polysulfide, polyurethane, hot melt butyl, or any other material that bonds adhesively with the spacer and panes. Thus, the spacer 16 together with the first and second seals 24, 25 isolates the gaseous atmosphere within the interpane space from the ambient atmosphere exterior to the IGU.

The interpane space of an IGU is preferably filled with an insulative gas. It is to be understood that the term insulative gas is used herein to refer to any gas that is a better thermal insulator than air. Preferably argon is used which is commercially available from a number of suppliers.

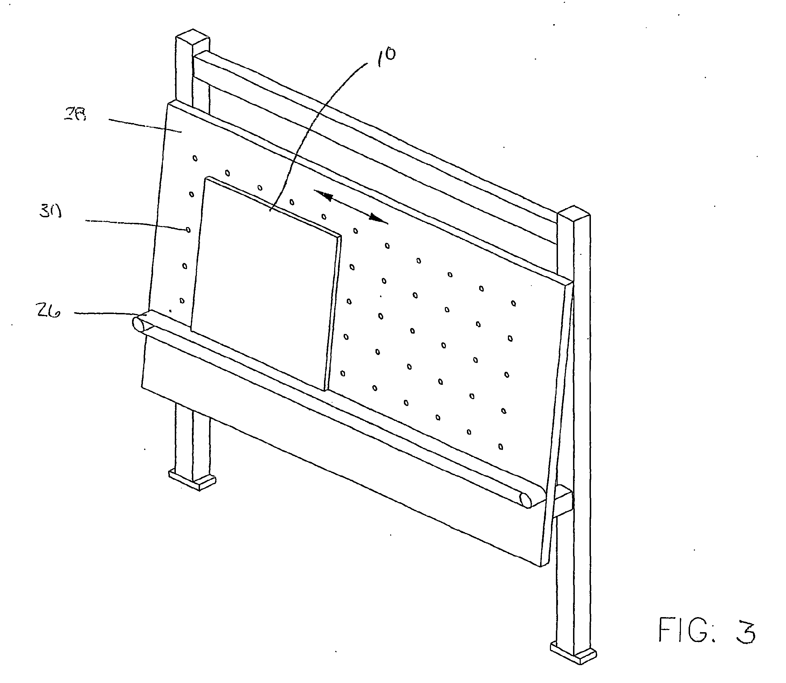

FIG. 3 illustrates generally a portion of a production line for manufacturing IGUs. Typically, if the IGU 10 has a glass pane that is coated with a low emissivity coating, the coating is applied prior to assembly and need not be described in further detail. The glass panes are typically manually loaded onto conveyor 26 that transports the panes as well as partially assembled units to various stations for processing. The conveyor 26 may be comprised of a generally horizontal belt or other suitable solid surface to support the bottom surface of the glass or partially assembled units. Generally a vertical platen 28 with a plurality rollers for vertical support and propulsion of the panes or partially formed assemblies propels the glass panes or partially formed assemblies through the production line.

In an illustrative production line, for example, the glass panes may be conveyed to a variety of stations including, for example, an edge deletion station where, if present, coating on the glass is removed from the perimeter of the pane. The edge deleted glass pane may then be conveyed to a washing station to remove any debris or unwanted material from the surface of the pane.

Pairs of panes, one pane with a spacer adhered thereto and a sealant deposited on the exposed surface of the spacer and a bare pane may be next conveyed to an assembly station (not shown) were the pairs are mated and joined together through the exposed sealant on the spacer.

The partially assembled IGUs are then conveyed to a gas-fill station where typically a gas heavier than air is inserted into the interpane space and finally the unit is sealed. There are a number of mechanisms for filling IGUs with inert gas. See U.S. Patent No. 5,957,169, for example.

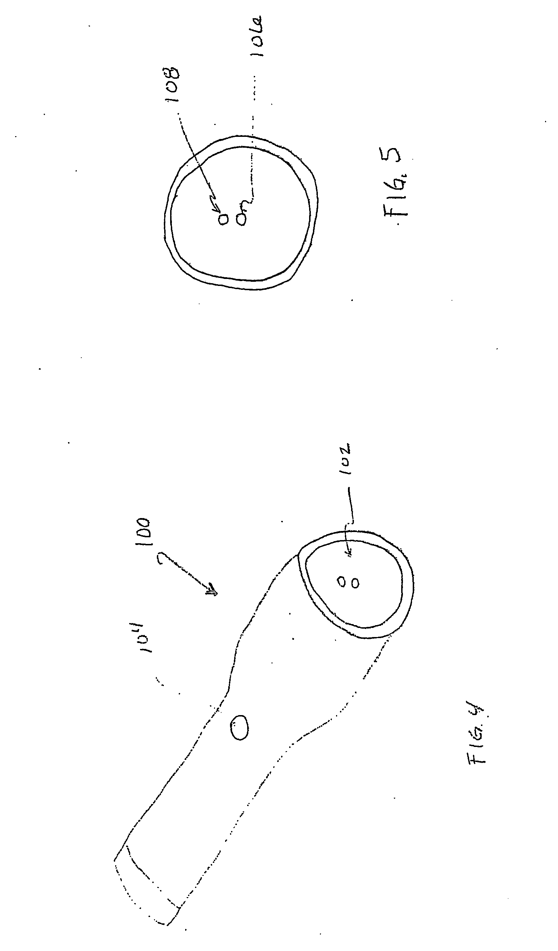

Fig. 4 is a perspective view of a measuring device 100, more particular a sparkunit which is part of the GasGlass device commercially offered by Sparklike, Ltd. of Finland. The measuring device 100 has a measuring end 102 which is placed against the IGU to be tested. A measurement button 104 is located on the device. FIG. 5 is a elevation view of the measuring end 102 of the measuring device shown in FIG. 4. A metallic pin 106 extends out from the center of the device. Located just above the metallic pin 106 is an optical fiber sensor 108. The measuring end 102 of the device 100 is placed against an IGU that is being tested. The measurement button 104 is depressed which ignites a high voltage spark inside the IGU. The color of the spark is an indication of the amount of gas in the interpane space of the IGU. The optical fiber sensor108 picks up this color level and it is processed by a processing unit (not shown) of the GasGlass device and converted into a gas concentration reading, preferably as a percentage.

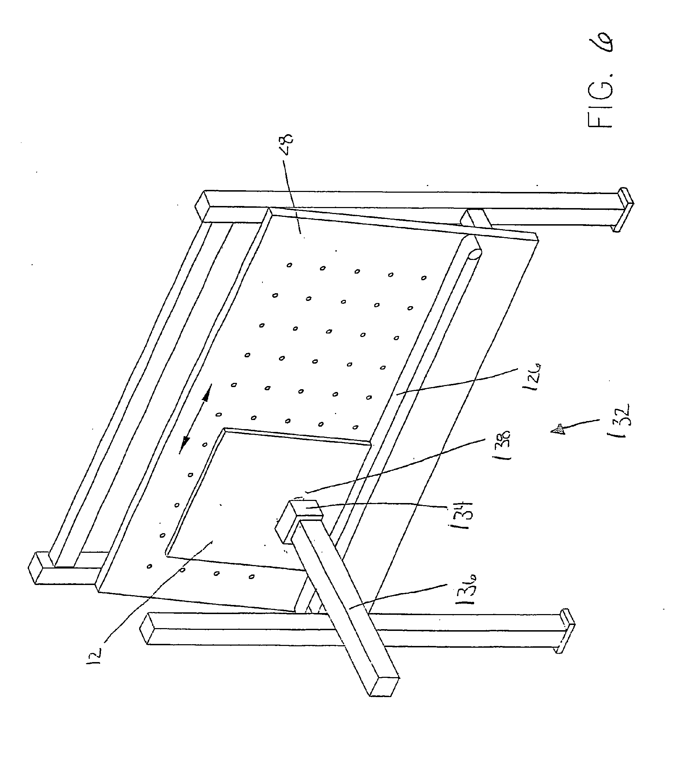

FIG. 6 is a perspective schematic of an argon gas measuring station provided on an insulating glass unit production line. The GasGlass device measuring device 100 is mounted on an arm 136 which is securely positioned on the production line. As the IGU reaches the measuring device 100, the measuring device 100 is moved into contact with a surface of the glass and a spark test is conducted. In particular, the arm 136 has mechanics to extend and withdraw the measuring device 100 from the glass. A digital display (not shown) indicates the amount of argon as a percentage in the interpane space.

Oftentimes the GasGlass device is not properly calibrated when it is delivered to the buyer or it may periodically need to be recalibrated. It is important to the productivity of the production line that calibration be possible on the production line. With the embodiments of the present invention, the GasGlass device can be regularly recalibrated.

To allow the recalibration to be performed in a quick and simple manner, a plurality of calibration standard units, i.e., standard IGUs, are created. One group of calibration standard units will have substantially identical construction, i.e. same thickness of panes, same distance between panes; but will be filled with different percentages of argon gas. Another group of calibration standard units will have substantially identical construction, i.e. same thickness of panes, same distance between panes, one or both of which will be different from the first group, and will also be filled with different percentages of argon gas. Preferably as many calibration standard units are made as types of IGUs that are made on the production line. In a prefer embodiment, a group of standard units will consist of seven calibration standard units with the following percentages of argon gas; 99%, 95%, 90%, 80%, 70%, 60% and 50%. In a preferred embodiment, the calibration standard units are filled with certified argon gas so that the precision of the argon content can be relied upon.

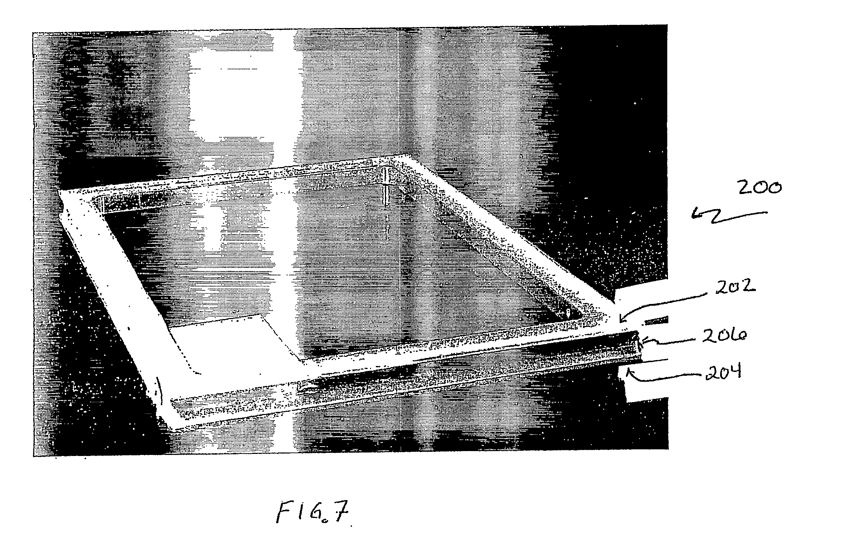

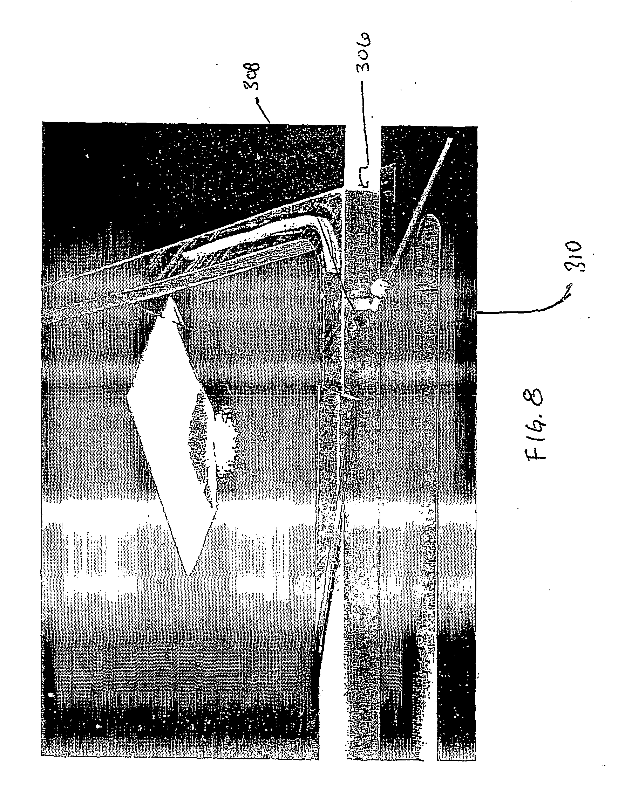

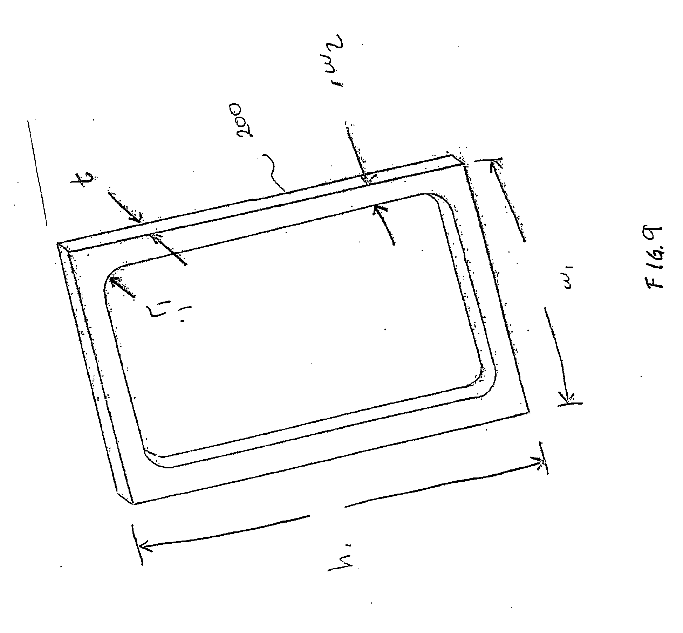

FIG. 7 is a perspective view of a calibration standard unit 200 created according to a preferred embodiment of the present invention. The calibration standard unit has a first pane of glass 202, a second pane of glass 204, a spacer 206 located between the first and second panes of glass. The spacer 206 is a solid continuous piece of material, i.e. aluminum or stainless steel as seen in FIG. 9. Using a solid spacer eliminates dead volume of gases that might dilute gas mixture over time and reduces the risk of gas loss that can occur with a spacer joint. In another embodiment shown in FIG. 8, not belonging to the present invention, the spacer 306 has a small hole 308 with a plug 310 so that the interpane space of a calibration standard unit can be accessed. Sealants are previously described seal the panes of glass and spacer together. Before the second pane of glass is adhered to the partially formed assembly, the interpane space is filled with a particular percentage of argon gas. This is done is a vacuum chamber. When the glass is held apart and nearly all atmosphere is removed, the argon gas mixture is flowed into the chamber and thus the air space cavity. When the air space is filled with desired gas, the glass slides are mechanically joined together with a spacer all while inside the vacuum chamber.

The procedure of calibrating or recalibration the measurement unit will now be described. The calibration curve that matches the IGU being tested, for example IGUs having pane thickness of 2 millimeters, is selected. The spark test is conducted and a reading is taken. The processing unit of the GasGlass device plots the reading on the selected calibration curve and maps a corresponding argon content reading which is displayed.

A plurality of calibration standard units of insulating glass units that have substantially identical construction except that each calibration standard unit has a known, specific mixture of certified argon gas/air are prepared. The measurement device is aimed at a particular calibration standard unit and activated. A reading of the amount of argon in the particular calibration standard unit is taken. These steps are repeated for each of the calibration standard units. Calibration information is generated with the readings taken.

Now, the measuring device can be retested and, if necessary, recalibrated on the production line. The measuring device is aimed at a particular insulating glass unit produced on an assembly line and activated to take a reading of that unit. One of a plurality of calibration standard units of insulating glass units that has the same construction as the calibrated test unit and has a known, specific amount of certified argon gas that matches what should be the argon content of the IGU on the production line, is selected. The measurement device is preferably removed from arm 136 and is aimed at that calibration standard unit and activated to take a reading of that unit. The measurement taken of the calibrated standard unit is compared with the known, specific amount of argon gas that the calibration standard unit has and the calibration of the measurement device is adjusted if the comparison taken of the measured calibration standard unit does not match the known amount of gas in the calibration standard unit.

Because various calibration standard units have been created, testing and recalibration can occur quickly in the production environment. An operator on the line can select a calibration standard unit that is constructed the same way as the IGUs being produced on the line. Without the calibration standard units and calibration techniques, users do not know if the measuring device is properly calibrated. If a user suspects that the device is not giving proper measurements, previously the user's only option was to return the device to the distributor or manufacturer and wait for it to be recalibrated.

In a preferred embodiment, the spacer shown in Figure 9 is made of stainless steel and has a thickness, t, of about 0.5 inches. The spacer has a height, h, of about 13.5 inches and an overall width, w₁, of about 9.5 inches. The width of each section of the pane, w₂, is about 0.5 inches. The radius of curvature, r₁, of the spacer is about 0.5 inches.

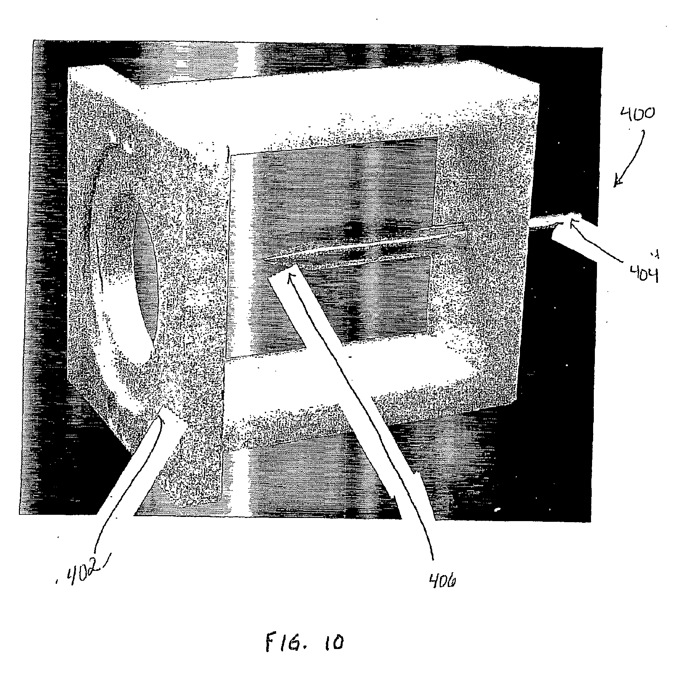

Figure 10 is a perspective view of a device 400 used to determine if the measurement device is generating sufficient power to conduct a spark test. It is important for the proper operation of the measurement unit that a sufficient amount of power be delivered to the unit so that a spark can be ignited in the interpane space. Before the present invention, the method of testing a measurement unit consisted of laying a screwdriver on a table with the metal tip pointing away from the table. The measurement unit was aimed at the screwdriver's metal tip a certain distance as measured by a tape measure and the device was activated. It was determined at what distance the measurement device was not able to produce a spark that arced across to the screwdriver tip.

The device shown in Figure 10 has a receiving end 402 for receiving the measuring end of the measurement device. At the opposite end of the device is a metal rod 404 that has a pointed tip 406 facing the receiving end 402 of the device 400. The pointed tip 406 is located about 1.575 inches from the metallic pin 106 of the measurement unit when it is mounted in the receiving end 402 of the device 400. It has been determined that if an arc can be produced between the metallic pin 106 and the pointed tip 406 of the rod 404 at that distance, the measurement, unit has sufficient power to properly conduct a spark test with an IGU. If an arc is not created, then the measure unit needs to be adjusted so that it delivers more power.

The above specification provides a complete description of the manufacture and use of the invention. Since many embodiments of the invention can be made without departing from the scope of the invention, the invention reside in the claims hereinafter appended.

## Claims

1. A calibration standard unit of an insulating glass unit (10) having a known amount of a gas contained in an interpane space (18), the calibration standard unit comprising:
a first pane of glass (12; 202);
a second pane of glass (14; 204) having substantially the same dimensions as the first pane of glass (12; 202);
a spacer (16; 206; 306) located between the first and second panes of glass (12,14; 202, 204) wherein the spacer (16; 206; 306) extends around the perimeter of the first and second pane of glass (12, 14; 202, 204), and the interpane space (18) is defined by the first and second pane (12, 14; 202, 204) and spacer (16; 206; 306) constructed of a solid, continuous piece of material, **characterised in that** the spacer (16; 206; 306) is made of aluminium or stainless steel.

2. The carburation standard unit according to claim 1, wherein the spacer (16; 206; 306) has a thickness ranging from about 0.250 inches to about 0.875 inches (about 6.35 mm to 22.2 mm).

3. The calibration standard unit according to any one of the preceding claims, wherein the gas contained in the interpane space (18) is argon.

4. The calibration standard unit according to claims 3, wherein the argon is certified argon.

5. The calibration standard unit according to any one of the preceding claims, wherein the percentage of gas contained in the interpane space (18) ranges from about 30% to about 100%, preferably from about 50% to about 100%.

6. The calibration standard unit according to any one of the preceding claims, wherein the first and second panes (12, 14; 202, 204) have the same thicknesses.

7. The calibration standard unit according to claim 6, wherein the thickness ranges from about 0.4 inches to about 1.0 inches (about 10 mm to 25 mm).

8. The calibration standard unit according to any one of the preceding claims, wherein the spacer (16; 206; 306) separates the first and second panes (12, 14; 202 204) by a separation distance ranging from about 0.250 inches to about 0.875 inches (about 6.35 mm to 22.2 mm).

9. The calibration standard unit according to any one of the preceding claims, wherein the first pane of glass (12; 202) is coated with a low emissivity coating.

10. A plurality of calibration standard units of an insulating glass unit (10) each in accordance with any of the preceding claim, wherein the distance that the spacer (16; 206; 306) separates the first and second panes (12, 14; 202, 204) is substantially the same for each of the calibration standard units, and wherein the thickness of the first and second panes of glass are substantially the same for each of the calibration standard units.

11. The plurality of units according to claim 10, wherein the amount of gas contained by a calibration standard unit (10) differs from all of the other calibration standard units.

## Patentansprüche

1. Kalibrationsstandardeinheit einer Isolierglaseinheit (10) mit einer bekannten Menge eines innerhalb eines Scheibenzwischenraums (18) enthaltenen Gases, wobei die Kalibrationsstandardeinheit Folgendes umfasst:
eine erste Glasscheibe (12; 202);
eine zweite Glasscheibe (14; 204) mit im Wesentlichen denselben Abmessungen wie die erste Glasscheibe (12; 202);
einen Abstandshalter (16; 206; 306), der sich zwischen der ersten und der zweiten Glasscheibe (12, 14; 202, 204) befindet, wobei der Abstandshalter (16; 206; 306) um den Umfang der ersten und der zweiten Glasscheibe (12, 14; 202, 204) herum verläuft und der Scheibenzwischenraum (18) durch die erste und die zweite Scheibe (12, 14; 202, 204) und den Abstandshalter (16; 206; 306) aus einem massiven, kontinuierlichen Stück Material definiert wird, **dadurch gekennzeichnet, dass** der Abstandshalter (16; 206; 306) aus Aluminium oder Edelstahl gefertigt ist.

2. Kalibrationsstandardeinheit nach Anspruch 1, wobei der Abstandshalter (16; 206; 306) eine Dicke im Bereich von ca. 0,250 Zoll bis ca. 0,875 Zoll (ca. 6,35 mm bis 22,2 mm) hat.

3. Kalibrationsstandardeinheit nach einem der vorherigen Ansprüche, wobei das in dem Scheibenzwischenraum (18) enthaltene Gas Argon ist.

4. Kalibrationsstandardeinheit nach Anspruch 3, wobei das Argon zertifiziertes Argon ist.

5. Kalibrationsstandardeinheit nach einem der vorherigen Ansprüche, wobei der Prozentanteil des in dem Scheibenzwischenraum (18) enthaltenen Gases im Bereich von ca. 30% bis ca. 100%, vorzugsweise von ca. 50% bis ca. 100% liegt.

6. Kalibrationsstandardeinheit nach einem der vorherigen Ansprüche, wobei die erste und die zweite Scheibe (12, 14; 202, 204) dieselbe Dicke haben.

7. Kalibrationsstandardeinheit nach Anspruch 6, wobei die Dicke im Bereich von ca. 0,4 Zoll bis ca. 1,0 Zoll (ca. 10 mm bis 25 mm) liegt.

8. Kalibrationsstandardeinheit nach einem der vorherigen Ansprüche, wobei der Abstandshalter (16; 206; 306) die erste und die zweite Scheibe (12, 14; 202, 204) um eine Distanz im Bereich von ca. 0,250 Zoll bis ca. 0,875 Zoll (ca. 6,35 mm bis 22,2 mm) voneinander trennt.

9. Kalibrationsstandardeinheit nach einem der vorherigen Ansprüche, wobei die erste Glasscheibe (12; 202) mit einem Überzug mit niedrigem Emissionsvermögen beschichtet ist.

10. Mehrere Kalibrationsstandardeinheiten einer Isolierglaseinheit (10) jeweils nach einem der vorherigen Ansprüche, wobei die Distanz, um die der Abstandshalter (16; 206; 306) die erste und die zweite Scheibe (12, 14; 202, 204) voneinander trennt, für jede der Kalibrationsstandardeinheiten im Wesentlichen gleich ist, und wobei die Dicke der ersten und der zweiten Glasscheibe für jede der Kalibrationsstandardeinheiten im Wesentlichen gleich ist.

11. Mehrere Einheiten nach Anspruch 10, wobei die Menge an in einer Kalibrationsstandardeinheit (10) enthaltenem Gas in allen anderen Kalibrationsstandardeinheiten unterschiedlich ist.

## Revendications

1. Unité standard d'étalonnage d'un vitrage isolant (10) ayant une quantité connue d'un gaz contenue dans un espace intercarreaux (18), l'unité standard d'étalonnage comprenant :
un premier carreau de verre (12 ; 202) ;
un second carreau de verre (14 ; 204) ayant sensiblement les mêmes dimensions que le premier carreau de verre (12 ; 202) ;
une entretoise (16 ; 206 ; 306) située entre les premier et second carreaux de verre (12, 14 ; 202, 204) dans laquelle l'entretoise (16 ; 206 ; 306) s'étend autour du périmètre des premier et second carreaux de verre (12, 14 ; 202, 204), et l'espace intercarreaux (18) est défini par les premier et second carreaux (12, 14 ; 202, 204) et l'entretoise (16 ; 206 ; 306) construite en un morceau solide continu de matériau, **caractérisé en ce que** l'entretoise (16 ; 206 ; 306) est réalisée en aluminium ou en acier inoxydable.

2. Unité standard d'étalonnage selon la revendication 1, dans laquelle l'entretoise (16 ; 206 ; 306) a une épaisseur allant d'environ 6,35 mm à 2,22 mm (d'environ 0,250 pouce à environ 0,875 pouce).

3. Unité standard d'étalonnage selon l'une quelconque des revendications précédentes, dans laquelle le gaz contenu dans l'espace intercarreaux (18) est de l'argon.

4. Unité standard d'étalonnage selon la revendication 3, dans laquelle l'argon est de l'argon homologué.

5. Unité standard d'étalonnage selon l'une quelconque des revendications précédentes, dans laquelle le pourcentage de gaz contenu dans l'espace intercarreaux (18) est compris entre environ 30% à environ 100%, de préférence entre environ 50% à environ 100%.

6. Unité standard d'étalonnage selon l'une quelconque des revendications précédentes, dans laquelle les premier et second carreaux (12, 14 ; 202, 204) ont la même épaisseur.

7. Unité standard d'étalonnage selon la revendication 6, dans laquelle l'épaisseur est comprise entre environ 10 mm à 25 mm (environ 0,4 pouce à environ 1,0 pouce).

8. Unité standard d'étalonnage selon l'une quelconque des revendications précédentes, dans laquelle l'entretoise (16 ; 206 ; 306) sépare les premier et second carreaux (12, 14 ; 202, 204) par une distance de séparation allant d'environ 6,35 mm à 22,2 mm (environ 0,250 pouce à environ 0,875 pouce).

9. Unité standard d'étalonnage selon l'une quelconque des revendications précédentes, dans laquelle le premier carreau de verre (12 ; 202) est revêtu d'un revêtement de faible émissivité.

10. Pluralité d'unités standard d'étalonnage d'un vitrage isolant (10), chacune conformément à l'une quelconque des revendications précédentes, dans laquelle la distance par laquelle l'entretoise (16 ; 206 ; 306) sépare les premier et second carreaux (12, 14 ; 202, 204) est sensiblement la même pour chacune des unités standard d'étalonnage, et dans laquelle l'épaisseur des premier et second carreaux de verre est sensiblement la même pour chacune des unités standard d'étalonnage.

11. Pluralité d'unités selon la revendication 10, dans laquelle la quantité de gaz contenue par une unité standard d'étalonnage (10) diffère de celle de toutes les autres unités standard d'étalonnage.
